# EUROPÄISCHE PATENTANMELDUNG

(11) **EP 4 703 613 A1**
(43) Veröffentlichungstag der Anmeldung: **04.03.2026**
(21) Anmeldenummer: 25191461.0
(22) Anmeldetag: 24.07.2025
(51) Int. Cl.: F16K 31/00, F16K 31/06, F16K 31/10, F16K 31/524

(54) **ELEKTROMAGENTISCHES VENTIL UND KÜHLKREISLAUF MIT EINEM ELEKTROMAGNETISCHEN VENTIL**

(30) Priorität: 26.08.2024 DE 102024208074
(71) Anmelder: Robert Bosch GmbH, 70442 Stuttgart (DE)
(72) Erfinder: Orozco Tella, Rodrigo Ramiro, 78395 San Luis Potosi (MX); Solis Rodriguez, Edgar Antonio, 78395 San Luis Potosi (MX); Leyva Diaz, Alejandro, 78434 San Luis Potosi (MX); Cantu Mancilla, Nestor Rafael, 78395 San Luis Potosi (MX); Guzman Saenz, Zaira Jazmin, 78395 San Luis Potosi (MX); Celote Sandoval, Mario Cesar, 78395 San Luis Potosi (MX); Almendarez Rangel, Pedro, 78395 San Luis Potosi (MX); Maldonado Becerril, Oscar, 78395 San Luis Potosi (MX)

(57) **Zusammenfassung**

Die Erfindung betrifft ein elektromagnetisches Ventil (10), insbesondere für einen Kühlkreislauf, mit Merkmalen des Anspruchs 1 und einen Kühlkreislauf, insbesondre für ein Fahrzeug, mit mindestens einem derartigen elektromagnetischen Ventil (10).

## Beschreibung

### Stand der Technik

Die Erfindung betrifft ein elektromagnetisches Ventil, insbesondere für einen Kühlkreislauf, mit Merkmalen des Anspruchs 1 und einen Kühlkreislauf, insbesondere für ein Fahrzeug, mit mindestens einem derartigen elektromagnetischen Ventil.

Elektromagnetische Ventile können bspw. in einem Kühlkreislauf eines Fahrzeugs eingesetzt werden. Durch das Öffnen und Schließen der Ventile kann ein Fließen eines Kühlmittels und damit ein Thermomanagement des Kühlkreislaufs mit einfachen Mitteln umgesetzt werden. Dabei kann das elektromagnetisch Ventil zum Öffnung und Schließen jeweils bestromt werden.

Nachteilig dabei ist es, dass sowohl zum Öffnen als auch zum Schließen des Ventils und/oder zum Halten des Ventils im offenen bzw. geschlossenem Zustand eine Bestromung, also elektrische Energie, benötigt wird.

### Offenbarung der Erfindung

Erfindungsgemäß wird ein elektromagnetisches Ventil vorgeschlagen. Das elektromagnetische Ventil kann für einen Kühlkreislauf, insbesondere für ein Fahrzeug, vorzugsweise Kraftfahrzeug, eingerichtet sein. Das elektromagnetische Ventil umfasst eine elektromagnetische Spule zum Erzeugen einer magnetischen Kraft. Die elektromagnetische Spule ist insbesondere zum Erzeugen eines magnetischen Felds eingerichtet. Das elektromagnetische Ventil umfasst einen innerhalb der elektromagnetischen Spule angeordneten Kolben.

Der Kolben kann (direkt oder indirekt) mittels der magnetischen Kraft der elektromagnetischen Spule beweglich ausgebildet sein. Der Kolben ist zwischen einer ersten Position und einer zweiten Position beweglich ausgebildet.

Das elektromagnetische Ventil umfasst eine Ventilscheibe, die in einem Ventilsitz des elektromagnetischen Ventils angeordnet ist. Die Ventilscheibe ist zwischen einer Offenstellung und einer Geschlossenstellung beweglich ausgebildet. In der Offenstellung kann ein Fluid (insbesondere Kühlmittel bzw. Kühlflüssigkeit, bspw. Öl) durch das Ventil fließen (das Ventil ist geöffnet). In der Geschlossenstellung kann kein Fluid (insbesondere Kühlmittel bzw. Kühlflüssigkeit, bspw. Öl) durch das Ventil fließen (das Ventil ist geschlossen).

Das Ventil ist derart eingerichtet, dass ein Bewegen des Kolbens aus der ersten Position in die zweite Position und in eine Zwischenposition, die zwischen der ersten Position und der zweiten Position angeordnet ist, ein Bewegen der Ventilscheibe aus der Offenstellung in die Geschlossenstellung bewirkt.

Alternativ oder zusätzlich ist das Ventil derart eingerichtet, dass ein Bewegen des Kolbens aus der Zwischenposition in die zweite Position und in die erste Position ein Bewegen der Ventilscheibe aus der Geschlossenstellung in die Offenstellung bewirkt.

Hierdurch kann nur mittels einmaliger, kurzzeitiger, insbesondere pulsartiger, Betätigung des Ventils bzw. mittels einmaliger, kurzzeitiger, insbesondere pulsartiger, Bestromung das Ventil geöffnet bzw. geschlossen werden. Es kann ein einfaches und kostengünstiges Ventil umgesetzt werden. Elektrische Energie kann eingespart werden. Mittels einer einfacher Hin- und Herbewegung des Kolbens kann ein (dauerhaftes) Öffnen bzw. ein (dauerhaftes) Schließen des Ventils umgesetzt werden.

Gemäß einer Weiterbildung des elektromagnetischen Ventils kann das Ventil ein Druckelement, ein Drehelement und eine Hülse umfassen. Das Druckelement kann (drehfest) an dem Kolben angeordnet sein. Das Druckelement kann an einem Ende des Kolbens angeordnet sein oder ein Ende des Kolbens ausbilden. Das Drehelement kann zum Bewegen der Ventilscheibe aus der Offenstellung in die Geschlossenstellung eingerichtet sein. Das Druckelement und das Drehelement können beweglich innerhalb der Hülse angeordnet sein. Das Druckelement, das Drehelement und die Hülse können eingerichtet sein, um nach dem Druckkopf-Kugelschreiber-Prinzip miteinander zu wechselwirken. Mit anderen Worten, das Druckelement, das Drehelement und die Hülse können eingerichtet sein, um nach dem Funktionsprinzip des Druckknopf-Kugelschreibers miteinander zu wechselwirken bzw. eine entsprechende Druckknopf-Kugelschreiber-Mechanik bilden.

Hierdurch kann mit einfachen Mitteln eine Hin- und Herbewegung des Kolbens umgesetzt werden, wobei dabei die Ventilscheibe aus der Offenstellung in die Geschlossenstellung oder umgekehrt überführt werden kann.

Gemäß einer Weiterbildung des elektromagnetischen Ventils kann das Ventil eine erste Feder umfassen. Die erste Feder kann zwischen dem Drehelement und der Ventilscheibe angeordnet und zum Übertragen einer Kraft zwischen dem Drehelement und der Ventilscheibe eingerichtet sein. Die Ventilscheibe und das Drehelement können gegeneinander mittels der ersten Feder vorgespannt sein. Mit anderen Worten, die erste Feder kann das Drehelement und die Ventilscheibe in entgegengesetzte Richtungen jeweils mit einer Kraft beaufschlagen.

Hierdurch kann mit einfachen Mitteln eine Wechselwirkung und eine Kraftübertragung zwischen dem Drehelement und der Ventilscheibe umgesetzt werden.

Gemäß einer Weiterbildung des elektromagnetischen Ventils kann das Ventil eine zweite Feder umfassen. Die Ventilscheibe kann mittels der zweiten Feder in die Offenstellung vorgespannt sein. Die zweite Feder kann eingerichtet sein, um die Ventilscheibe aus der Geschlossenstellung in die Offenstellung zu überführen. Die zweite Feder kann eingerichtet sein, um den Kolben aus der zweiten Position in die erste Position oder in die Zwischenposition zu bewegen.

Hierdurch kann mit einfachen Mitteln eine Überführung der Ventilscheibe aus der Geschlossenstellung in die Offenstellung und/oder eine Überführung des Kolbens aus der zweiten Position in die Zwischenposition oder in die erste Position umgesetzt werden.

Gemäß einer Weiterbildung des elektromagnetischen Ventils kann das Druckelement, das Drehelement und/oder die Hülse derart eingerichtet sein, dass ein Bewegen des Kolbens aus der ersten Position in die zweite Position ein Bewegen des Drehelements aus einer dritten Position in eine vierte Position bewirkt, dass ein Bewegen des Kolbens aus der zweiten Position in die Zwischenposition ein Bewegen des Drehelements aus der vierten Position in eine Sperrposition, die zwischen der dritten Position und der vierten Position angeordnet ist, bewirkt, dass ein Bewegen des Kolbens aus der Zwischenposition in die zweite Position ein Bewegen des Drehelements aus der Sperrposition in die vierte Position bewirkt und/oder, dass ein Bewegen des Kolbens aus der zweiten Position in die erste Position ein Bewegen des Drehelements aus der vierten Position in die dritte Position bewirkt. In der dritten Position des Drehelements kann die Ventilscheibe in der Offenstellung angeordnet sein. In der vierten Position des Drehelements kann die Ventilscheibe in der Geschlossenstellung angeordnet sein.

Hierdurch kann mittels einer einfachen Hin- und Herbewegung des Kolbens eine Wechselwirkung zwischen dem Druckelement über das Drehelement (und die erste Feder) auf die Ventilscheibe transferiert und eine entsprechende Kraftübertragung umgesetzt werden.

Gemäß einer Weiterbildung des elektromagnetischen Ventils kann das Drehelement zwischen mindestens einer ersten Drehstellung, mindestens einer zweiten Drehstellung und mindestens einer dritten Drehstellung innerhalb der Hülse drehbar ausgebildet sein. Das Druckelement, das Drehelement und/oder die Hülse können derart ausgebildet sein, dass das Drehelement in der ersten Drehstellung angeordnet ist, wenn das Drehelement in der dritten Position angeordnet ist, dass das Drehelement in der zweiten Drehstellung angeordnet ist, wenn das Drehelement in der Sperrposition angeordnet ist und/oder, dass das Drehelement in der dritten Drehstellung angeordnet ist, wenn das Drehelement in der vierten Position angeordnet ist.

Hierdurch kann das Drehelement mittels einer einfachen Drehung bzw. Rotation insbesondere in der Sperrposition arretiert und so die Ventilscheibe in der Geschlossenstellung gehalten werden.

Gemäß einer Weiterbildung des elektromagnetischen Ventils kann das Druckelement eine erste Verzahnung und das Drehelement eine zweite Verzahnung aufweisen. Das Druckelement und das Drehelement können derart eingerichtet sein, dass die erste und die zweite Verzahnung zumindest teilweise miteinander in Eingriff gebracht werden können. Die erste Verzahnung und die zweite Verzahnung können einander zugewandt sein. Die erste Verzahnung und die zweite Verzahnung können eingerichtet sein, um nach dem Druckkopf-Kugelschreiber-Prinzip miteinander zu wechselwirken.

Hierdurch kann mit einfachen Mitteln das Überführen des Drehelements aus der ersten Drehstellung in die zweite Drehstellung und/oder die dritte Drehstellung (und umgekehrt), also eine Drehung des Drehelements, umgesetzt werden.

Gemäß einer Weiterbildung des elektromagnetischen Ventils kann das Druckelement mindestens ein erstes Führungselement, das Drehelement mindestens ein zweites Führungselement und die Hülse mindestens ein drittes Führungselement aufweisen. Das erste, das zweite und das dritte Führungselement können eingerichtet sein, um nach dem Druckkopf-Kugelschreiber-Prinzip miteinander zu wechselwirken.

Hierdurch kann mit einfachen Mitteln der Mechanismus nach dem Funktionsprinzip des Druckkopf-Kugelschreibers umgesetzt werden.

Gemäß einer Weiterbildung des elektromagnetischen Ventils kann das Ventil einen innerhalb der elektromagnetischen Spule angeordneten Anker aufweisen. Der Anker kann mittels der magnetischen Kraft der elektromagnetischen Spule (direkt) beweglich ausgebildet und eingerichtet sein, um den Kolben aus der ersten Position in die zweite Position und/oder aus der Zwischenposition in die zweite Position zu bewegen. Der Anker kann aus einem (ferro)magnetischen Material ausgebildet sein. Der Anker kann fest mit dem Kolben verbunden sein. Der Kolben kann an dem Anker angeordnet sein.

Erfindungsgemäß wird ein Kühlkreislauf, insbesondere für ein Fahrzeug, vorzugsweise ein Kraftfahrzeug, mit mindestens einem elektromagnetischen Ventil gemäß obiger Ausführungen vorgeschlagen.

Hinsichtlich der mit dem Kühlkreislauf erzielbaren Vorteile wird auf die diesbezüglichen Ausführungen zum elektromagnetischen Ventil verwiesen zur weiteren Ausgestaltung des Kühlkreislaufs können die im Zusammenhang mit dem elektromagnetischen Ventil beschriebenen und/oder die nachfolgend noch erläuterten Maßnahmen dienen.

Nachfolgend wird eine Ausführungsform der Erfindung unter Bezugnahme auf die beiliegenden Zeichnungen erläutert. Es zeigen:
- Figur 1: eine schematische Schnittansicht eines elektromagnetischen Ventils mit einem Kolben in einer ersten Position,
- Figur 2: eine perspektivische Darstellung eines Druckelements, eines Drehelements und einer Hülse des elektromagnetischen Ventils gemäß Figur 1,
- Figur 3: eine schematische Schnittansicht des elektromagnetischen Ventils gemäß Figur 1 mit dem Kolben in einer zweiten Position,
- Figur 4: eine schematische Schnittansicht des elektromagnetischen Ventils gemäß Figur 1 mit dem Kolben in einer Zwischenposition,
- Figur 5: eine schematische Schnittansicht des elektromagnetischen Ventils gemäß Figur 1 mit dem Kolben in der zweiten Position und
- Figur 6: eine schematische Schnittansicht des elektromagnetischen Ventils gemäß Figur 1 mit dem Kolben in der ersten Position.

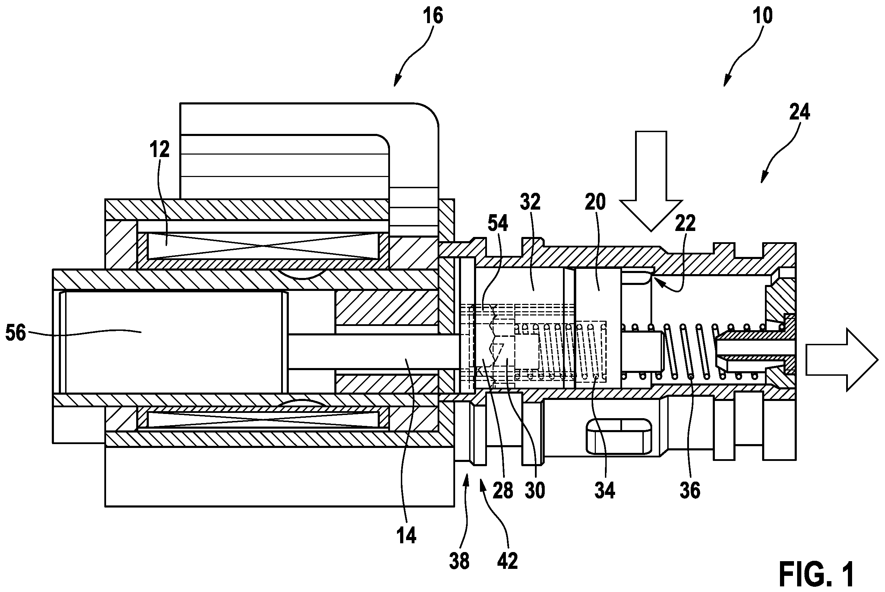

Figur 1 zeigt eine schematische Schnittansicht eines elektromagnetischen Ventils 10. Das elektromagnetische Ventil 10 kann für einen Kühlkreislauf, insbesondere eines Fahrzeugs (Kraftfahrzeugs), eingerichtet sein.

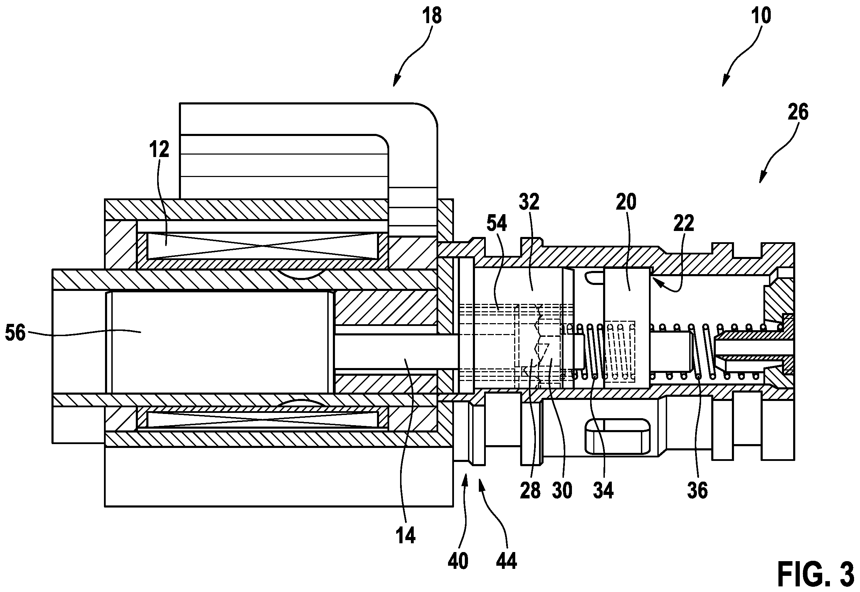

Das Ventil 10 umfasst eine elektromagnetischen Spule 12 zum Erzeugen einer magnetischen Kraft. Das Ventil 10 umfasst einen innerhalb der elektromagnetischen Spule 12 angeordneten Kolben 14. Der Kolben 14 ist zwischen einer ersten Position 16 und einer zweiten Position 18 beweglich ausgebildet. Das Ventil 10 umfasst eine Ventilscheibe 20, die in einem Ventilsitz 22 des elektromagnetischen Ventils 10 angeordnet ist. Die Ventilscheibe 20 ist zwischen einer Offenstellung 24 und einer Geschlossenstellung 26 beweglich ausgebildet. In der Offenstellung 24 (Ventil 10 geöffnet) kann ein Fluid durch das Ventil 10 fließen. Dies ist in Figur 1 durch zwei dicker Pfeile angedeutet. In der Geschlossenstellung 26 (Ventils 10 geschlossen) kann kein Fluid durch das Ventil 10 fließen (vgl. Figuren 3 bis 5).

Das Ventil 10 ist derart eingerichtet, dass ein Bewegen des Kolbens 14 aus der ersten Position 16 in die zweite Position 18 und in eine Zwischenposition 17, die zwischen der ersten Position 16 und der zweiten Position 18 angeordnet ist, ein Bewegen der Ventilscheibe 20 aus der Offenstellung 24 in die Geschlossenstellung 26 bewirkt.

Alternativ oder zusätzlich ist das Ventil 10 derart eingerichtet, dass ein Bewegen des Kolbens 14 aus der Zwischenposition 17 in die zweite Position 18 und in die erste Position 16 ein Bewegen der Ventilscheibe 20 aus der Geschlossenstellung 26 in die Offenstellung 24 bewirkt.

Das Ventil 10 kann ein Druckelement 28, das an dem Kolben 14 (drehfest) angeordnet ist, umfassen. Das Ventil 10 kann ein Drehelement 30 zum Bewegen der Ventilscheibe 20 aus der Offenstellung 24 in die Geschlossenstellung 26 umfassen. Das Ventil 10 kann eine Hülse 32 umfassen, wobei das Druckelement 28 und das Drehelement 30 beweglich innerhalb der Hülse 32 angeordnet sein können. Das Druckelement 28, das Drehelement 30 und die Hülse 32 können eingerichtet sein, um nach dem Druckkopf-Kugelschreiber-Prinzip miteinander zu wechselwirken.

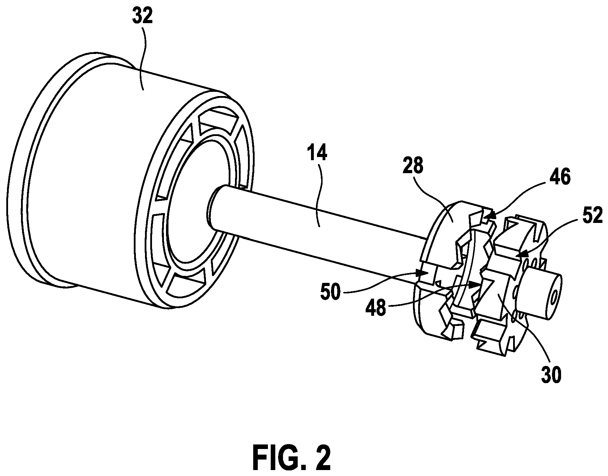

Figur 2 zeigt eine perspektivische Darstellung des Druckelements 28, des Drehelements 30 und der Hülse 32 des elektromagnetischen Ventils 10 gemäß Figur 1.

Das Ventil 10 kann eine erste Feder 34 umfassen. Die erste Feder 34 kann zwischen dem Drehelement 30 und der Ventilscheibe 20 angeordnet sein. Die erste Feder 34 kann zum Übertragen einer Kraft zwischen dem Drehelement 30 und der Ventilscheibe 20 eingerichtet sein.

Das Ventil 10 kann eine zweite Feder 36 umfassen. Die Ventilscheibe 20 kann mittels der zweiten Feder 36 in die Offenstellung vorgespannt sein.

Das Druckelement 28, das Drehelement 30 und/oder die Hülse 32 können derart eingerichtet sein, dass ein Bewegen des Kolbens 14 aus der ersten Position 16 in die zweite Position 18 ein Bewegen des Drehelements 30 aus einer dritten Position 38 in eine vierte Position 40 bewirkt.

Das Druckelement 28, das Drehelement 30 und/oder die Hülse 32 können derart eingerichtet sein, dass ein Bewegen des Kolbens 14 aus der zweiten Position 18 in die Zwischenposition 17 ein Bewegen des Drehelements 30 aus der vierten Position 40 in eine Sperrposition 39, die zwischen der dritten Position 38 und der vierten Position 40 angeordnet ist, bewirkt.

Das Druckelement 28, das Drehelement 30 und/oder die Hülse 32 können derart eingerichtet sein, dass ein Bewegen des Kolbens 14 aus der Zwischenposition 17 in die zweite Position 18 ein Bewegen des Drehelements 30 aus der Sperrposition 39 in die vierte Position 40 bewirkt.

Das Druckelement 28, das Drehelement 30 und/oder die Hülse 32 können derart eingerichtet sein, dass ein Bewegen des Kolbens 14 aus der zweiten Position 18 in die erste Position 16 ein Bewegen des Drehelements 30 aus der vierten Position 40 in die dritte Position 38 bewirkt.

In der dritten Position 38 des Drehelements 30 kann die Ventilscheibe 20 in der Offenstellung 24 angeordnet sein. In der vierten Position 40 des Drehelements 30 kann die Ventilscheibe 20 in der Geschlossenstellung 26 angeordnet sein.

Das Drehelement 30 kann zwischen mindestens einer ersten Drehstellung 42, mindestens einer zweiten Drehstellung 43 und mindestens einer dritten Drehstellung 44 innerhalb der Hülse 32 drehbar ausgebildet sein.

Das Druckelement 28, das Drehelement 30 und/oder die Hülse 32 können derart ausgebildet sein, dass das Drehelement 30 in der ersten Drehstellung 42 angeordnet ist, wenn das Drehelement 30 in der dritten Position 38 angeordnet ist.

Das Druckelement 28, das Drehelement 30 und/oder die Hülse 32 können derart ausgebildet sein, dass das Drehelement 30 in der zweiten Drehstellung 43 angeordnet ist, wenn das Drehelement 30 in der Sperrposition 39 angeordnet ist.

Das Druckelement 28, das Drehelement 30 und/oder die Hülse 32 können derart ausgebildet sein, dass das Drehelement 30 in der dritten Drehstellung 44 angeordnet ist, wenn das Drehelement 30 in der vierten Position 40 angeordnet ist.

Das Druckelement 28 kann eine erste Verzahnung 46 aufweisen. Das Drehelement 30 kann eine zweite Verzahnung 48 aufweisen. Das Druckelement 28 und das Drehelement 30 können derart eingerichtet sein, dass die erste und die zweite Verzahnung 46, 48 (insbesondere während einer Bewegung des Kolbens 14) zumindest teilweise miteinander in Eingriff gebracht werden können. Die erste und die zweite Verzahnung 46, 48 können eingerichtet sein, um nach dem Druckknopf-Kugelschreiber-Prinzip miteinander zu wechselwirken.

Das Druckelement 28 kann mindestens ein erstes Führungselement 50 aufweisen. Das erste Führungselement 50 kann als eine Ausnehmung am Druckelement 28 ausgebildet sein. Das Drehelement 30 kann mindestens ein zweites Führungselement 52 aufweisen. Das zweite Führungselement 52 kann als eine Ausnehmung am Drehelement 30 ausgebildet sein. Die Hülse 32 kann mindestens ein drittes Führungselement 54 aufweisen. Das dritte Führungselement 54 kann als ein länglich ausgebildeter Fortsatz (bzw. Schiene), ausgebildet sein. Der länglich ausgebildete Fortsatz der Hülse 32 kann mit der Ausnehmung des Druckelements 28 bzw. mit der Ausnehmung des Drehelements 30 übereinstimmen bzw. korrespondieren. Das erste, das zweite und das dritte Führungselement 50, 52, 54 können eingerichtet sein, um nach dem Druckknopf-Kugelschreiber-Prinzip miteinander zu wechselwirken.

Das Ventil 10 kann einen innerhalb der elektromagnetischen Spule 12 angeordneten Anker 56 umfassen. Der Anker 56 kann mittels der magnetischen Kraft der elektromagnetischen Spule 12 beweglich ausgebildet sein. Der Anker 56 kann eingerichtet sein, um den Kolben 14 aus der ersten Position 16 in die zweite Position 18 zu bewegen. Alternativ oder zusätzlich kann der Anker 56 eingerichtet sein, um den Kolben 14 aus der Zwischenposition 17 in die zweite Position 18 zu bewegen.

Im Folgenden wird anhand der Figuren 1 bis 6 die Funktionsweise des Ventils 10 erläutert:
Figur 1 zeigt das Ventil 10 mit dem Kolben 14 in der ersten Position 16. Die Ventilscheibe 20 ist in der Offenstellung 24 angeordnet. Das Ventil 10 ist damit geöffnet. Das Drehelement 30 ist in der dritten Position 38 und in der ersten Drehstellung 42 angeordnet.

Durch ein Bestromen (Anlegen einer elektrischen Spannung) der elektromagnetischen Spule 12 wird eine magnetische Kraft erzeugt, die den Anker 56 in Figur 1 nach rechts bewegt. Damit bewegt sich der Kolben 14 aus der ersten Position 16 in die zweite Position 18. Dabei wird auch das Druckelement 28 in Figur 1 nach rechts bewegt. Dabei nimmt das Druckelement 28 das Drehelement 30 mit, sodass das Drehelement 30 ebenfalls in Figur 1 nach rechts aus der dritten Position 38 in die vierte Position 40 bewegt wird. Dabei wird das Drehelement 30 aufgrund der Wechselwirkung zwischen der ersten und der zweiten Verzahnung 46, 48 aus der ersten Drehstellung 42 in die dritte Drehstellung 44 überführt bzw. gedreht. Die Drehung des Drehelements 30 geschieht dabei aufgrund der Wechselwirkung zwischen der ersten Verzahnung 46, der zweiten Verzahnung 48, des ersten Führungselements 50, des zweiten Führungselements 52 und/oder des dritten Führungselements 54 nach dem Funktionsprinzip des Druckknopf-Kugelschreibers.

Das Drehelement 30 in der vierten Position 40 übt eine Kraft auf die erste Feder 34 aus (drückt die erste Feder 34 zusammen). Die erste Feder 34 überträgt diese Kraft auf die Ventilscheibe 20, sodass die Ventilscheibe 20 in die Geschlossenstellung 26 überführt (gedrückt) wird. Dabei wird die zweite Feder 36 zusammengedrückt. In der Geschlossenstellung 26 der Ventilscheibe 20 ist das Ventil 10 geschlossen.

Figur 3 zeigt das Ventil 10 mit dem Kolben 14 in der zweiten Position 18.

Durch ein Einstellen des Bestromens der elektromagnetischen Spule 12 entfällt die magnetische Kraft, die den Anker 56 und damit den Kolben 14 in den Figuren nach rechts treibt. Die erste Feder 34 drückt das Drehelement 30 und die Ventilscheibe 20 auseinander. Dabei wird das Drehelement 30 und damit das Druckelement 28 (samt Kolben 14 und Anker 56) in den Figuren nach links bewegt. Das Druckelement 28 wird in die Zwischenposition 17 bewegt. Das Drehelement 30 wird so mittels der ersten Feder 34 in die Sperrposition 39 bewegt. In der Sperrposition 39 verhakt (arretiert) sich das Drehelement 30 in der zweiten Drehstellung 43 innerhalb der Hülse 32. Die erste Feder 34 drückt zum einen das Drehelement 30 in die Sperrposition 39 und zum anderen die Ventilscheibe 20 in die Geschlossenstellung 26 (entgegen der Federkraft der zweiten Feder 36).

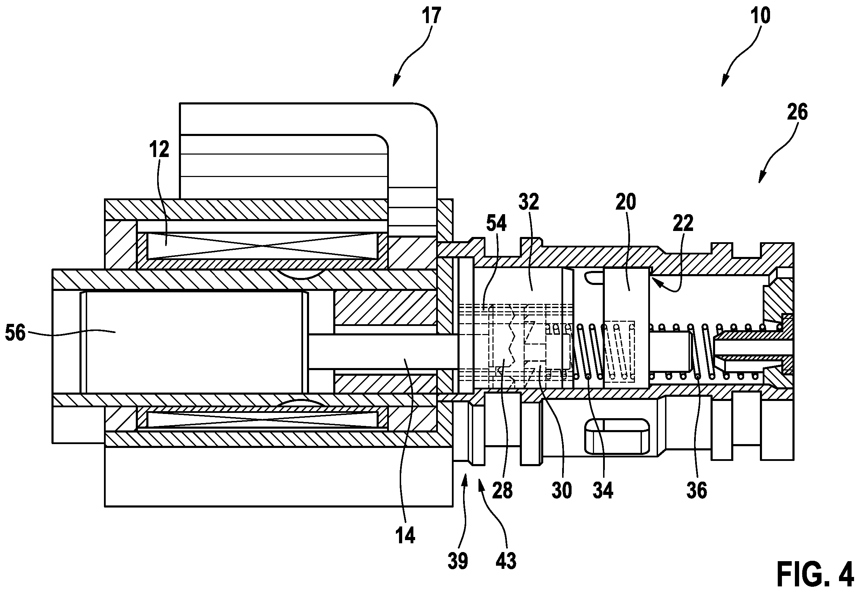

Figur 4 zeigt das Ventil 10 mit dem Kolben 14 in der Zwischenposition 17.

Durch ein erneutes Bestromen (Anlegen einer elektrischen Spannung) der Spule 12 wird erneut eine magnetische Kraft erzeugt, die den Anker 56 und damit den Kolben 14 samt Druckelement 28 in den Figuren nach rechts bewegt. Dabei wird der Kolben 14 aus der Zwischenposition 17 in die zweite Position 18 bewegt. Das Druckelement 28 nimmt dabei das Drehelement 30 mit und bewegt es aus der Sperrposition 39 in die vierte Position 40. Dabei wird das Drehelement 30 erneut gedreht, sodass das Drehelement 30 in der dritten Drehstellung 44 angeordnet ist. Die Drehung des Drehelements 30 geschieht dabei erneut aufgrund der Wechselwirkung zwischen der ersten Verzahnung 46, der zweiten Verzahnung 48, des ersten Führungselements 50, des zweiten Führungselements 52 und/oder des dritten Führungselements 54 nach dem Funktionsprinzip des Druckknopf-Kugelschreibers. Die Ventilscheibe 20 ist dabei in der Geschlossenstellung 26 angeordnet.

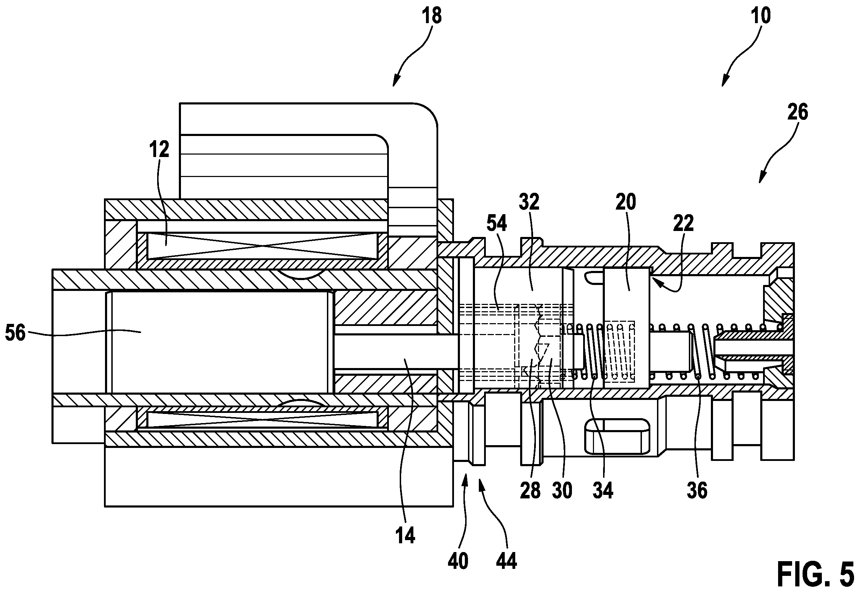

Figur 5 zeigt das Ventil 10 mit dem Kolben 14 in der zweiten Position 18.

Durch das erneute Einstellen des Bestromens der elektromagnetischen Spule 12 entfällt die magnetische Kraft, die den Anker 56 und damit den Kolben 14 in den Figuren nach rechts treibt. Die erste Feder 34 drückt das Drehelement 30 und die Ventilscheibe 20 wieder auseinander. Aufgrund der dritten Drehstellung 44 verhakt sich das Drehelement 30 nicht innerhalb der Hülse 32 in der Sperrposition 39, sondern bewegt sich weiter in den Figuren nach links in die dritte Position 38. Damit wird auch das Druckelement 28 (samt dem Kolben 14 und dem Anker 56) in den Figuren nach links bewegt, sodass der Kolben 14 wieder in der ersten Position 16 angeordnet ist. Die mittels der ersten Feder 34 auf die Ventilscheibe 20 ausgeübte Kraft ist nun kleiner, da das Drehelement 30 nicht mehr in der Sperrposition 39 verharrt, sodass die zweite Feder 36 die Ventilscheibe 20 aus der Geschlossenstellung 26 in die Offenstellung 24 (entgegen der Federkraft der ersten Feder 34) bewegen kann.

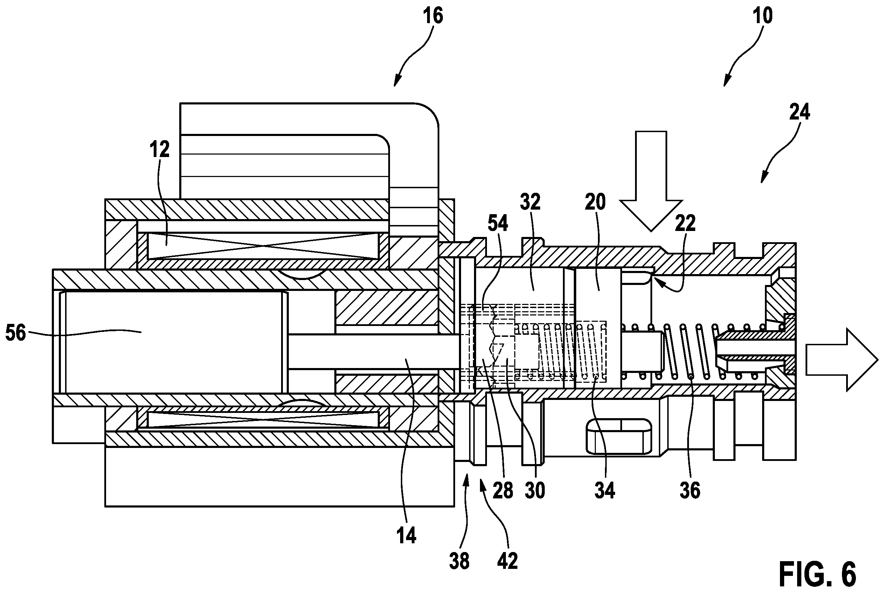

Figur 6 zeigt das Ventil 10 mit dem Kolben 14 wieder in der ersten Position 16.

Der oben beschriebene Vorgang kann beliebig oft wiederholt werden, wobei das Ventil 10 durch jeweils ein einmaliges, kurzzeitiges, insbesondere pulsartiges, Bestromen dauerhaft geöffnet oder dauerhaft geschlossen werden kann.

## Patentansprüche

1. Elektromagnetisches Ventil (10), insbesondere für einen Kühlkreislauf, umfassend:
- eine elektromagnetische Spule (12) zum Erzeugen einer magnetischen Kraft,
- einen innerhalb der elektromagnetischen Spule (12) angeordneten Kolben (14), wobei der Kolben (14) zwischen einer ersten Position (16) und einer zweiten Position (18) beweglich ausgebildet ist,
- eine Ventilscheibe (20), die in einem Ventilsitz (22) angeordnet ist, wobei die Ventilscheibe (20) zwischen einer Offenstellung (24), in der ein Fluid durch das Ventil (10) fließen kann, und einer Geschlossenstellung (26), in der kein Fluid durch das Ventil (10) fließen kann, beweglich ausgebildet ist,
- wobei das Ventil (10) derart eingerichtet ist,
- dass ein Bewegen des Kolbens (14) aus der ersten Position (16) in die zweite Position (18) und in eine Zwischenposition (17), die zwischen der ersten Position (16) und der zweiten Position (18) angeordnet ist, ein Bewegen der Ventilscheibe (20) aus der Offenstellung (24) in die Geschlossenstellung (26) bewirkt und/oder
- dass ein Bewegen des Kolbens (14) aus der Zwischenposition (17) in die zweite Position (18) und in die erste Position (16) ein Bewegen der Ventilscheibe (20) aus der Geschlossenstellung (26) in die Offenstellung (24) bewirkt.

2. Elektromagentisches Ventil (10) nach Anspruch 1, **dadurch gekennzeichnet, dass** das Ventil (10) umfasst:
- ein Druckelement (28), wobei das Druckelement (28) an dem Kolben (14) angeordnet ist
- ein Drehelement (30) zum Bewegen der Ventilscheibe (20) aus der Offenstellung (24) in die Geschlossenstellung (26),
- eine Hülse (32), wobei das Druckelement (28) und das Drehelement (30) beweglich innerhalb der Hülse (32) angeordnet sind,
- wobei das Druckelement (28), das Drehelement (30) und die Hülse (32) eingerichtet sind, um nach einem Druckknopf-Kugelschreiber-Prinzip miteinander zu wechselwirken.

3. Elektromagnetisches Ventil (10) nach Anspruch 1 oder 2, **dadurch gekennzeichnet, dass** das Ventil (10) eine erste Feder (34) umfasst, wobei die erste Feder (34) zwischen dem Drehelement (30) und der Ventilscheibe (20) angeordnet und zum Übertragen einer Kraft zwischen dem Drehelement (30) und der Ventilscheibe (20) eingerichtet ist.

4. Elektromagnetisches Ventil (10) nach einem der voranstehenden Ansprüche, **dadurch gekennzeichnet, dass** das Ventil (10) eine zweite Feder (36) umfasst, wobei die Ventilscheibe (20) mittels der zweiten Feder (36) in die Offenstellung (24) vorgespannt ist.

5. Elektromagnetisches Ventil (10) nach einem der Ansprüche 2 bis 4, **dadurch gekennzeichnet, dass** das Druckelement (28), das Drehelement (30) und/oder die Hülse (32) derart eingerichtet sind,
- dass ein Bewegen des Kolbens (14) aus der ersten Position (16) in die zweite Position (18) ein Bewegen des Drehelements (30) aus einer dritten Position (38) in eine vierte Position (40) bewirkt,
- dass ein Bewegen des Kolbens (14) aus der zweiten Position (18) in die Zwischenposition (17) ein Bewegen des Drehelements (30) aus der vierten Position (40) in eine Sperrposition (39), die zwischen der dritten Position (38) und der vierten Position (40) angeordnet ist, bewirkt,
- dass ein Bewegen des Kolbens (14) aus der Zwischenposition (17) in die zweite Position (18) ein Bewegen des Drehelements (30) aus der Sperrposition (39) in die vierte Position (40) bewirkt und/oder
- dass ein Bewegen des Kolbens (14) aus der zweiten Position (18) in die erste Position (16) ein Bewegen des Drehelements (30) aus der vierten Position (40) in die dritte Position (38) bewirkt,
- wobei in der dritten Position (38) des Drehelements (30) die Ventilscheibe (20) in der Offenstellung (24) und/oder in der vierten Position (40) des Drehelements (30) die Ventilscheibe (20) in der Geschlossenstellung (26) angeordnet ist.

6. Elektromagnetisches Ventil (10) nach dem voranstehenden Anspruch, **dadurch gekennzeichnet, dass** das Drehelement (30) zwischen mindestens einer ersten Drehstellung (42), mindestens einer zweiten Drehstellung (43) und mindestens einer dritten Drehstellung (44) innerhalb der Hülse (32) drehbar ausgebildet ist, wobei das Druckelement (28), das Drehelement (30) und/oder die Hülse (32) derart ausgebildet sind,
- dass das Drehelement (30) in der ersten Drehstellung (42) angeordnet ist, wenn das Drehelement (30) in der dritten Position (38) angeordnet ist,
- dass das Drehelement (30) in der zweiten Drehstellung (43) angeordnet ist, wenn das Drehelement (30) in der Sperrposition (39) angeordnet ist, und/oder
- dass das Drehelement (30) in der dritten Drehstellung (44) angeordnet ist, wenn das Drehelement (30) in der vierten Position (40) angeordnet ist.

7. Elektromagnetisches Ventil (10) nach einem der Ansprüche 2 bis 6, **dadurch gekennzeichnet**, das Druckelement (28) eine erste Verzahnung (46) und das Drehelement (30) eine zweite Verzahnung (48) aufweisen, wobei das Druckelement (28) und das Drehelement (30) derart eingerichtet sind, dass die erste und die zweite Verzahnung (46, 48) zumindest teilweise miteinander in Eingriff gebracht werden können.

8. Elektromagnetisches Ventil (10) nach einem der Ansprüche 2 bis 7, **dadurch gekennzeichnet, dass** das Druckelement (28) mindestens ein erstes Führungselement (50), das Drehelement (30) mindestens ein zweites Führungselement (52) und die Hülse (32) mindestens ein drittes Führungselement (54) aufweisen, wobei das erste, das zweite und das dritte Führungselement (50, 52, 54) eingerichtet sind, um nach dem Druckknopf-Kugelschreiber-Prinzip miteinander zu wechselwirken.

9. Elektromagnetisches Ventil (10) nach einem der voranstehenden Ansprüche, **dadurch gekennzeichnet, dass** das Ventil (10) einen innerhalb der elektromagnetischen Spule (12) angeordneten Anker (56) umfasst, wobei der Anker (56) mittels der magnetischen Kraft der elektromagnetischen Spule (12) beweglich ausgebildet und eingerichtet ist, um den Kolben (14) aus der ersten Position (16) in die zweite Position (18) und/oder aus der Zwischenposition (17) in die zweite Position (18) zu bewegen.

10. Kühlkreislauf, insbesondere für ein Fahrzeug, umfassend mindestens ein Ventil (10) nach einem der voranstehenden Ansprüche.
